# EUROPEAN PATENT APPLICATION

(11) **EP 0 771 090 A1**
(43) Date of publication of application: **02.05.1997**
(21) Application number: 95307317.8
(22) Date of filing: 16.10.1995
(51) Int. Cl.: H04J 3/06, H04J 3/16

(54) **Programmable PCM/TDM Demultiplexer**

(71) Applicant: LORAL AEROSPACE CORPORATION, New York, NY 10016 (US)
(72) Inventor: Kaufmann, John, Palo Alto CA 94303 (US)
(74) Representative: Vaufrouard, John Charles

(57) **Abstract**

A programmable PCM/TDM demultiplexer including an FA function unit including Frame Alignment Logic (FAL) hardware controlled by a Programmable Frame Alignment Controller (PFAC), and accompanied by a DECommutation and dejustification (DEC) function unit including Output Logic Hardware (OLH) controlled by a Programmable Decommutator Sequencer (PDS) controlled in turn by a Programmable Decommutator Sequencer Controller (PDSC).

## Description

### BACKGROUND OF THE INVENTION

### Technical Field

The present invention relates generally to Pulse Code Modulated/Time Division Multiplexed data communications apparatus and more particularly to an improved means for accomplishing high frequency demultiplexing.

### Discussion of the Prior Art

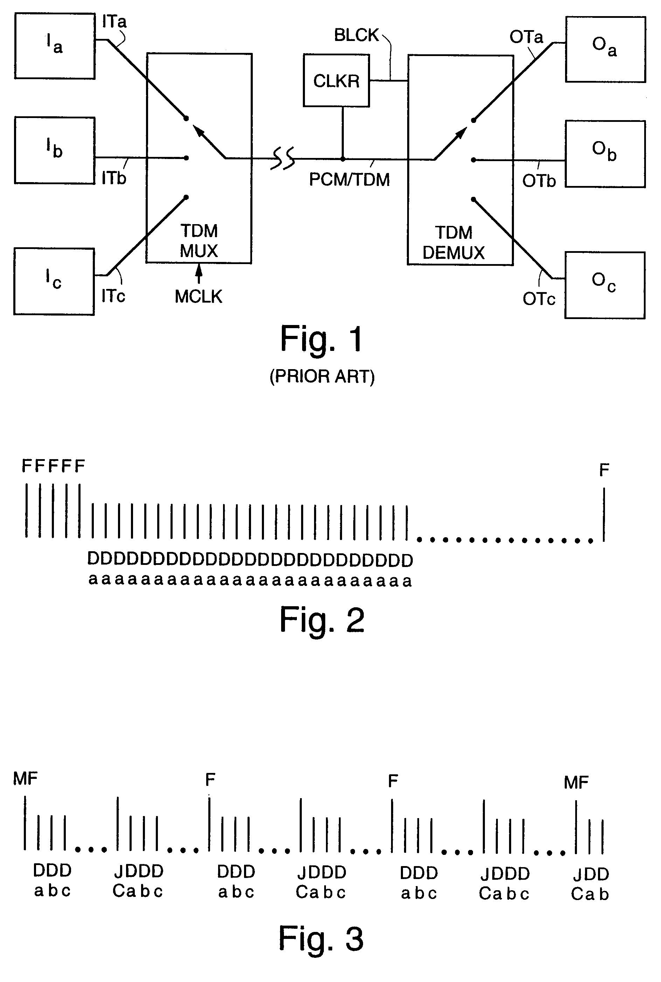

Fig. 1 represents individual electronic data sources Ia, Ib, Ic,... timed by local oscillators (CLKa), (CLKb), (CLKc) and transmitting Pulse Code Modulated (PCM) data signals at input rates RATEa, RATEb, RATEc, via Input Tributaries (ITa, ITb, ITc) to inputs of a conventional Time Division MUltipleXer (TDM MUX). TDM MUX, driven by its transmitter-oscillator Master CloCK (MCLK), samples the tributaries in some selected order at a rate faster than the total allowed input rate and, as higher frequency-translated data bit signals, multiplexes then into time-slots of a PCM/TDM signal stream. This stream is then received and de-multiplexed by PCM/TDM demultiplexer TDM DEMUX, which produces individual output data streams on output tributaries OTa, OTb, and OTc, to output devices Oa, Ob, and Oc. Clock recovery unit CLKR derives the Bit CLocK signal (BCLK) from the PCM/TDM signal stream for use by the TDM DEMUX. After clock recovery has been performed, the demultiplexing process involves the additional steps of frame alignment, dejustification, and decommutation.

### Frame Alignment

Fig. 2 shows an example PCM/TDM signal stream of data bits (Da), (Db), (Dc) grouped in octets during frame-intervals. Frame interval formats are defined conventionally by Frame Alignment (FA) and Multi-Frame Alignment (MFA) words composed of patterns of Frame alignment bits (F) inserted either contiguous to or periodically between frame boundaries. When a PCM/TDM signal stream is received, in order for the bits combined in the stream to be sorted out by the inverse process of demultiplexing, first, the MCLK timing is recovered as the re-named BCLK signal. Then, bits comprising FA words are searched in streams of bits assembled by a demultiplexer. Candidate FA word patterns are compared against reference FA word patterns until one matches. Unless bits which coincidentally mimic FA words distract the search, contiguous F bit pattern-synch is achieved in one frame interval.

More generally, bits F can be interspersed along frames as illustrated in Fig. 3. In this case, frame-synch requires assembling candidate bits starting from every possible position for a FA word in a frame or multi-frame.

Assembling a candidate FA word from just one starting bit position in each BCLK cycle may not achieve frame-synchronization until assembling candidate FA words from bits at every possible starting position. The probability of attaining frame synchronization is proportional to the total possible starting positions from which FA candidate bits are tested during a given cycle. This requires memory capacity for the corresponding number of candidate FA pattern words.

Multiframe boundaries are coincident with frame boundaries. After FA synchronisation there is only one possible starting position in each frame for a candidate Multi Frame (MF) bit. In the absence of bit-errors, MF synchronization is achieved afterwards within one more MF interval.

### Justification

In plesiochronous communications, signals from Ia, Ib, Ic timed by CLKa, etc. having precision to prescribed tolerances within which they are uncertain. Therefore, input tributary signal timing deviations are preferably accommodated by Justification (J) bit time-slots (Fig. 3) during which compensating bits may be inserted or deleted. Justification Control (JC) words bit values indicate justification actions to be taken. Each justifiable tributary needs a JC word and a J bit time slot. TDM groupings of frames in multi-frames permits a common control word to be used to justify a different tributary in each frame. This way, a JC word will not have to be tested for every tributary in every frame.

In positive justification, the PCM/TDM stream bit-clock exceeds the nominal tributary bit-clock rates. Occasionally no source data bit is available to occupy a data-slot and so the multiplexer transmits a "stuff" bit in the J bit time slot, and also sets the Justification Control (JC) bits active for the corresponding tributary.

Negative justification may be used where tributary bit-clock rates can exceed the nominal rate of the PCM/TDM stream. J bit time-slots are initially vacant and occasionally used to carry excess bits input from faster tributaries. In this case the corresponding Justification Control bits are activated.

Positive/zero/negative justification uses both positive and negative J slots, and either adjusts up, down, or not at all, rates of data bits received from input tributaries.

Bits JC are arranged either consecutively or interspersed through frames to form JC words. JC words are conventionally interpreted either by odd-majority bit-voting or by pattern-matching. When positive justified tributary frames are received and active bits JC words are detected, stuff bits are deleted from J slots. When negative-justified streams are received and active JC words are detected, data bits are retained in slots J. Zero de-justification deletes stuff bits from positive slots J and retains data bits in negative slots J.

### Decommutation

Once the data stream has been dejustified, the bits are routed to the appropriate tributary in accordance with the format in which they were sampled in the multiplexer.

### Prior Art Features and Performance

The prior art MPX-100 demultiplexer has been implemented in an IC with a field-programmable working memory, using down-loaded software, for decommutating TDM formats in general. The MPX-100 working memory is required to cycle at the rate BCLK of the multiplexed stream. Any programmable demultiplexer depending upon a programmable working memory to cycle at the BCLK rate encounters a dilemma for an implementation in ICs. Memory speeds are inversely related to their sizes. IC memory capacities must be balanced against access speeds. This compromises functioning and programming advantages. With its memory size, the MPX-100 has not operated at 50 Mbit/sec.

Specific applications desire a small demultiplexer capable of very high-speed decommutation of TDM signals and re-programmable for practically any TDM format.

U.S. patent No. 4, 377,861 by Huffman describes a demultiplexer for re-distributing data bits to respective tributaries by using individual channel units provided with real-time framing information by a state controller and provided with tributary routing selectability by a microprocessor.

In U.S. patent No. 4,430,734 by Hubbard, multiple digital voice channels are demultiplexed and added together to establish conference calls. Voice channel data is stored in a buffer memory and extracted by a microprocessor.

There remains, therefore, an need for a programmable decommutator capability to decommutate data streams, such as tributaries in a telecommunications application, from a large variety of TDM formats which operates at the highest attainable data rate and can be implemented in current state of the art IC technology.

### SUMMARY OF THE INVENTION

The present invention provides a PCM/TDM demultiplexer which is both operable with fast input bit clocks and is re-programmable for a variety of formats and levels of hierarchical demultiplexing. The invention is suitable for embodiment in as few as two and preferable only one IC(s).

Memory sizes and access delay times are minimized by separating demultiplexing transformations into a separate FA function unit and a DECommutation and dejustification (DEC) function unit which operate in a coordinated manner.

Memory sizes and access delay times are further minimized by separating the control within the DEC function unit into a non-branching sequence controller preferably operating at the BCLK rate, and a branching sequence controller preferably operating at a fraction of the BCLK rate.

Memory sizes and access delay times are still further minimized by separating the control memory of branching controllers contained within the FA and DEC function units into an address segment and an instruction segment.

A demultiplexer architecture according to the invention comprises an FA function unit including Frame Alignment Logic (FAL) hardware controlled by a Programmable Frame Alignment Controller (PFAC), and accompanied by a DEC function unit including Output Logic Hardware (OLH) controlled by a Programmable Decommutator Sequencer (PDS) controlled in turn by a Programmable Decommutator Sequencer Controller (PDSC).

Unlike Hubbard, the present invention does not require a frame buffer memory. The invention has the advantage that there is no requirement to store a whole frame of bit-signals. Data bits are decommutated one by one as the TDM stream proceeds through the decommutation function. In contrast to Huffman, the invention provides for state controller implementation efficiency and particularly programmability.

### IN THE DRAWING

Fig. 1 represents a simplified PCM/TDM communications link;
Fig. 2 is an example PCM/TDM format with contiguous F bits;
Fig. 3 is an example PCM/TDM format with distributed F bits, justification control JC bits, and justification J bits;
Fig. 4 represents the basic architecture for preferred embodiments of PCM/TDM demultiplexers according to the present invention;
Fig. 5 shows the FA function implemented by FAL and PFAC;
Fig. 6 illustrates a generic PDSC architecture;
Fig. 6a shows a PDSC in a first embodiment;
Fig. 6b shows a PDSC in a second embodiment;
Fig. 6c shows a PDSC in a third embodiment;
Fig. 6d shows a PDSC in a fourth embodiment;
Fig. 7 shows a PDS embodied in preferred Sequence Program Memory (SPM) and Sequence Control Logic (SCL) components;
Fig. 8 shows OLH hardwired in DeJustification Logic (DJL) and DeCommutation Logic (DCL) circuits; and

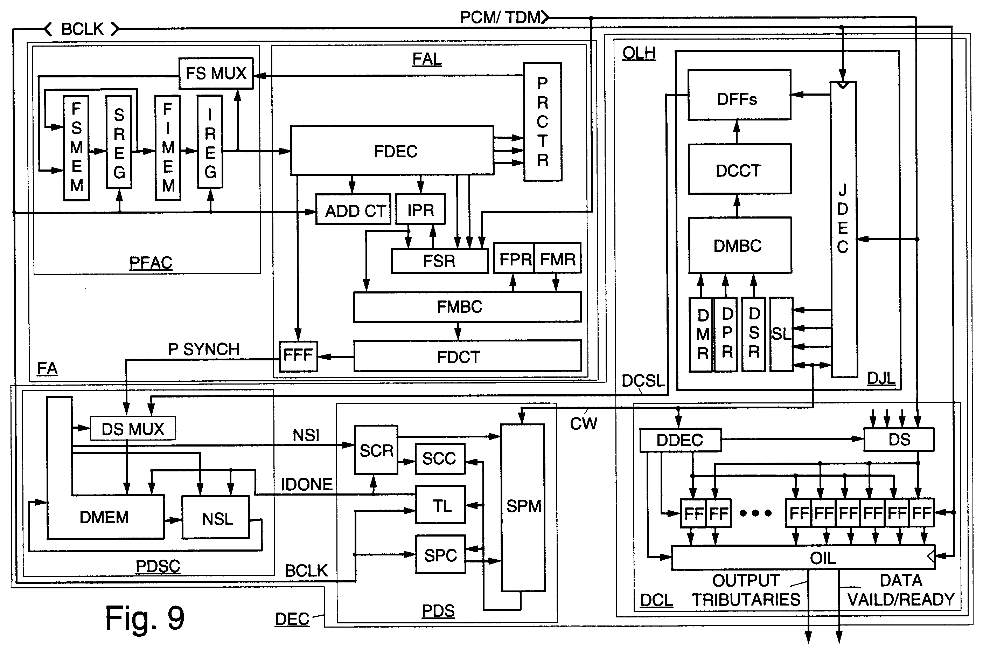

Fig. 9 connects the FA function of Fig. 5 and the DEC function of Figs. 6-7, 8 in an example implementation.

### DETAILED DESCRIPTION OF THE PREFERRED EMBODIMENTS

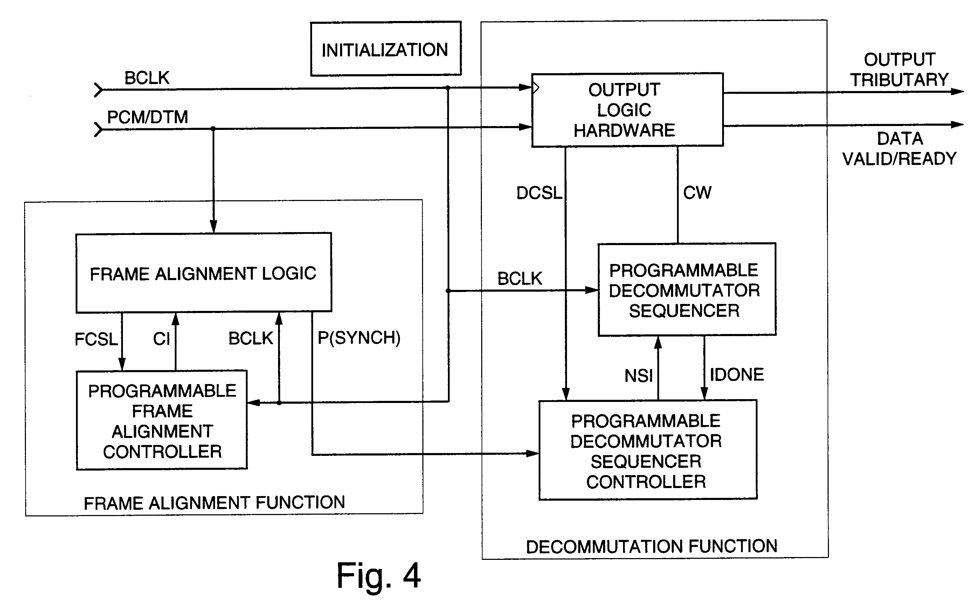

The present invention provides an architecture for a PCM/TDM demultiplexer as shown in Fig. 4 including individual coordinated FA and DEC functions. The invention minimizes its reliance on reprogrammable memory cycling at the BCLK rate, which at the present state of technology may rise to as high as 50 MHz. A balance of hard-wired with programmable logic preserves demultiplexing speed and programming flexibility.

### Frame Alignment Circuit Description

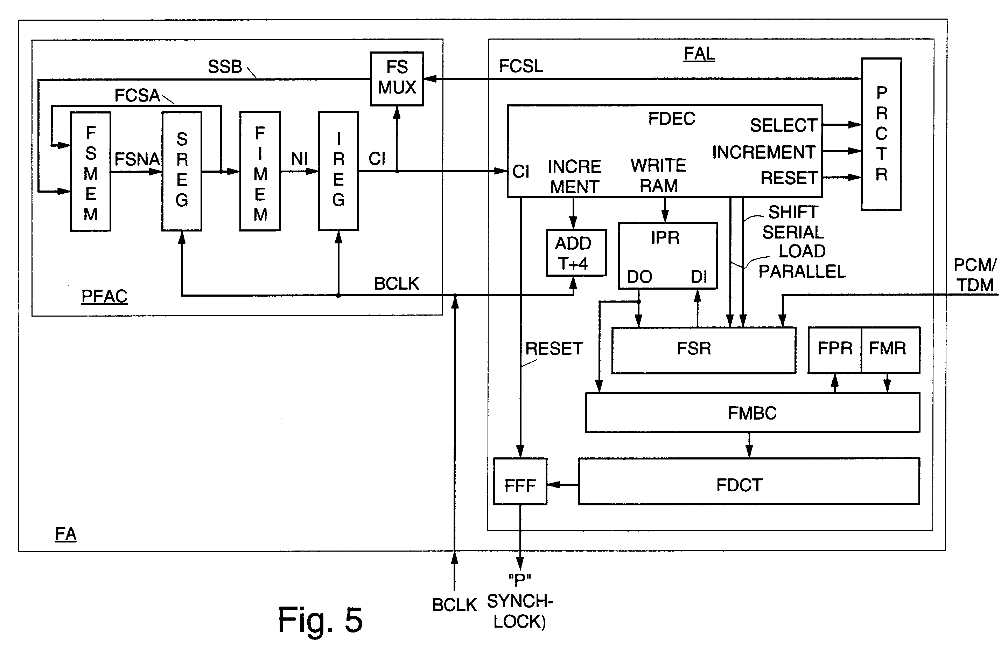

The candidate FA pattern word assembly and matching step of the FA function must keep pace with BCLK, and is therefore implemented by hardwired logic unit FAL. Referring to Fig. 5, the FAL is controlled by the PFAC, which is programmed with short sequences of microcode which it executes at the rate of one microinstruction per cycle of BCLK. The PFAC preferably comprises a branching programmable state machine having control storage partitioned into FAL State address MEMory (FSMEM) and FAL Instruction MEMory (FIMEM) segments, and having Next Instruction (NI) output dependent only upon a current state stored in a State REGister (SREG). The memory segments are each small enough to be accessed at a suitable design margin faster than the fastest specified BCLK rate. The FSMEM presents PFAC Next-State Address (FNSA) signals to SREG. Successive FNSAs are latched on successive cycles of BCLK and presented as PFAC Current State Address (FCSA) signals to address lines of FSMEM and FIMEM. Consequently, FIMEM produces the NI signal. The next cycle of BCLK advances signal NI through Instruction REGister (IREG) to emerge as a Current Instruction signal (CI). CI is applied to PFAC Status MUltipleXer (FSMUX) to select an input FAL Condition Status Line (FCSL) which is used as a Selected Status Bit (SSB) preferably to one address line of FSMEM, to facilitate branching of programs in the controller PFAC. An example FSMEM can store 64 states of which each can branch two ways, which provides up to 128 addresses. CI is received in FAL through FAL instruction DECoder (FDEC). FAL also includes serial/parallel FAL Shift Register (FSR), Interleave Pattern RAM (IPR), initializable ADDress CounTer (ADDCT), reference FA Pattern Register (FPR), FAL Mask Register (FMR), FAL Masked-Bit Comparator (FMBC), FAL DeteCT if all comparisons are TRUE circuit (FDCT), FAL Flip-Flop (FFF), and a bank of (preferably 8) PRogrammable CounTeRs (PRCTRs). In this example, PFAC control memory data is organized as follows:

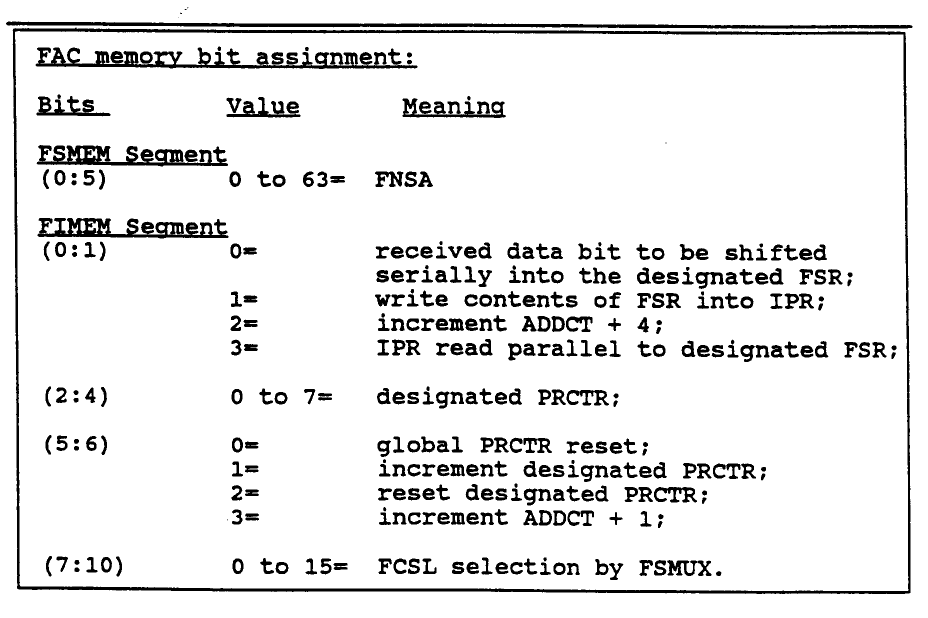

Speed goals for sync-lock onto FA signals dispersed through frames of particular durations are related to IPR sizes. An FAL embodied in an IC preferably economizes memory area by tolerating slower FA-searches. An IPR capable of storing 1/4 of all the potential candidate FA-pattern bits implies that for it to attain FA-sync will sometimes require as long as four frame intervals. To achieve FA-sync, the IPR executes repetitions of:
1. Shifting a 4th-received PCM/TDM bit into the FSR for assembly with candidate FA pattern bits loaded in step 4, thus producing an updated set of candidate FA pattern bits;
2. Writing the updated candidate FA pattern bits back into its respective location in the IPR;
3. Incrementing ADDCT by 4; and
4. Parallel-loading the IPR's newly addressed contents into the FSR in preparation for step 1.

FDCT senses outputs from FMBC. Only when there is a match between IPR and FPR in the bit positions indicated by FMR, FDCT produces a logic TRUE signal. The program in PFAC typically uses counters in PRCTR to keep track of its progress in analyzing the signal stream. It can increment them, reset them, and test them to detect when they are at their terminal count. If the program in PFAC senses that a set of 4th-addressed bit patterns has been collected without finding a match, it preferably operates to incremented ADDCT by 1 and repeat the search on the next set of 4th-addresses until a match is found.

The Fig. 5 FAL can test distributed bits for FA-words beginning in any of 64 time-slots during each frame.

To inspect only one time-slot for a starting bit in each frame, an alternate embodiment of FAL can omit the IPR and ADDCT. Also, contiguous-bit FA pattern-searches which shift bits into the FSR at the BCLK rate do not need the IPR.

### Frame Alignment Process Description

PCM/TDM signals are received through circuits which recover MCLK (Fig. 1) timing as BCLK, which accompanies PCM/TDM stream bits arriving at the demultiplexer of Fig. 4.

Received PCM/TDM signal streams expected to have non-contiguous FA-bits are searched for possible starting bits at multiple positions. Each time the assembly of a bit completes a candidate FA-pattern, the assembled pattern-word is masked by FMR and compared in FMBC against a reference FA pattern stored in FPR. Ordinarily, upon the first match, to tag an identified frame boundary, FAL issues a frame-synch Pulse (P). FA-synch losses are not ordinarily conceded until after several failed comparisons. Preferably, FA-loss thresholds are programmable through monitoring by the program in the PFAC of the comparison outcomes in counters such as PRCTR (Fig. 5).

Achieving FA in some TDM formats next involves searching with a multi-frame pattern for a MF boundary. MF boundaries have pre-determined relationships to single-frame boundaries. Hence, MFA word searches need only compare a limited number of positions for potential MFA word start bits, and do not need the IPR.

### Dejustification and Decommutation

In decommutating a received PCM/TDM signal stream, various short, structured sequences of bits are manipulated repetitively in a manner predetermined by the particular PCM/TDM multiplexing format, in order to distribute data bits to their respective output tributaries. Dejustification is a modification of the decommutation action. Justification control bits contained in the signal stream are detected, and depending on their interpretation in the particular multiplexing format, a bit from the signal stream may be sent to an output tributary, modified and then sent, or deleted.

The prior art MPX-100 used one state-machine to directly control both its dejustification and its decommutation OLH. Current-state status or condition inputs could cause the state machine used in the MPX-100 to alter its output immediately. However, analysis of MPX-100 operations has ascertained that decommutation processes can be successfully performed by a state machine whose outputs depend only upon preceding-states and conditions. This is the response exhibited by the type of branching state machines used in the present invention. Such machines cycle faster than equivalent machines of the type used in the MPX-100.

TDM decommutation and dejustification control functions according to the present invention are implemented in a combination of two machines. One is a branching state machine operating preferably at a lower clock rate than BCLK, controlling a second, preferably smaller, simpler non-branching state machine operating at the BCLK rate.

Fig. 4 shows the decommutation and dejustification function according to the present invention consisting of an OLH, a PDS and a PDSC. The OLH typically receives short sequences of Control Word (CW) signals from the PDS as a result of the PDS receiving a particular Next Sequence Instruction (NSI) from the PDSC. Each short sequence of CW signals typically controls the OLH to decommutate sequences of bit formats which repeat within a frame. The PDS outputs CWs at the BCLK rate. The PDS is preferably a non-branching sequencer controlled by a counter so that it begins executing the CW addressed by the NSI and then cyclically executes successive CWs until a CW is reached which has the Sequence Done (SDONE) bit turned on, at which time the sequencer decrements the Sequence Repeat Number (SRN) from the NSI, and either signals Instruction Done (IDONE) if the SRN reached the limit count, or starts executing CWs beginning once again with the CW addressed by the NSI. The IDONE signal causes the PDSC state machine to cycle and issue a new NSI signal to the PDS and the process repeats. The sequence generation control process of the PDSC can be made conditional by testing the FA synch-lock Line P, or OLH condition status lines DCSL. Typical condition status signals are the status of justification control actions and terminals counts of counters.

The single branching state machine in the prior art MPX-100 had a single segment control memory which cycled at, and limited, the BCLK rate. It was also large compared to the present invention because each location contained storage for a state, an instruction, and an alternate state and instruction.

In contrast, the present invention has only a relatively small memory SPM operating at BCLK speed. The larger DMEM operates preferably at one-fourth BCLK speed, and is smaller than prior art MPX-100 memory due to the different structure of the branching controller PDSC. The PDSC is the type of controller whose output depends only on the current state and not on the current input, so it need not store alternate instruction and state in each location as did the memory of the MPX-100 controller. These improvements together allow PDS and PDSC memory to occupy 30% less total space than MPX-100 memory, while providing comparable performance.

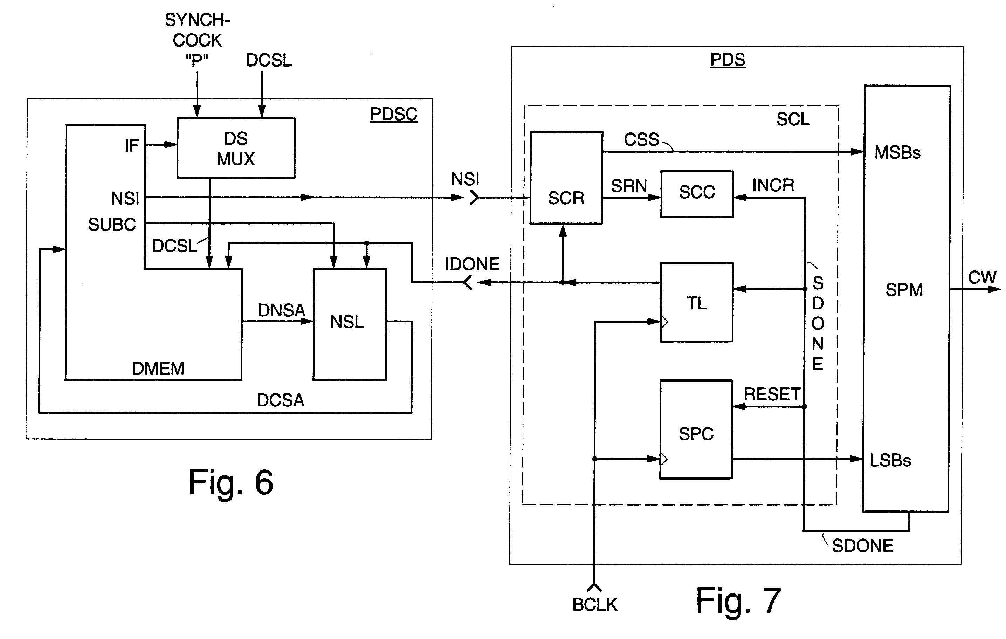

Conditional PDSC instructions are supported for branching to another part of the program or calling a subroutine in the usual manner in computing controllers. When an NSI is a procedure CALL, SUBroutine Control (SUBC) bits cause Next State Logic (NSL) Subroutine-Return Register (SRR) (detailed in Fig. 6d) to increment the value of, and then save, the normal Decommutator Next-State Address (DNSA). When the body of the subroutine has been completed, a RETURN instruction generates SUBC field bits to designate the SRR as the source for the Decommutator Current-State Address (DCSA) word.

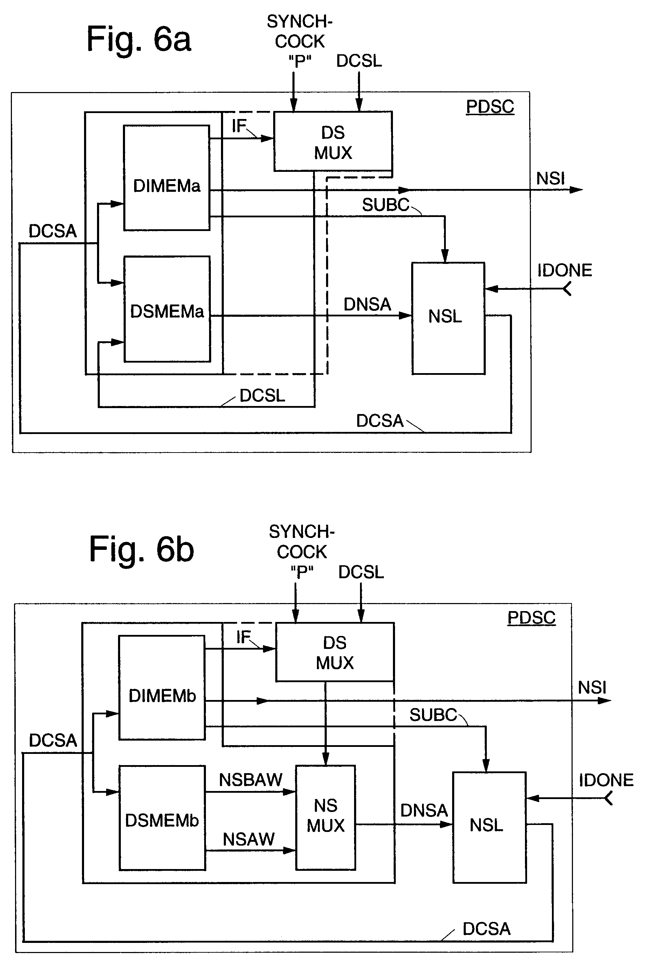

The "IF... THEN GOTO" instruction can be looped and further nested by incrementing and testing OLH registers which are similar to PRCTR in Fig. 5. Referring to Fig. 6a, for conditional instructions the branch condition select (IF) bits direct Status MUltipleXer (DSMUX) to select an OLH Condition Status Line (DCSL) or line P to test and thereby influence the PDSC output on the next cycle.

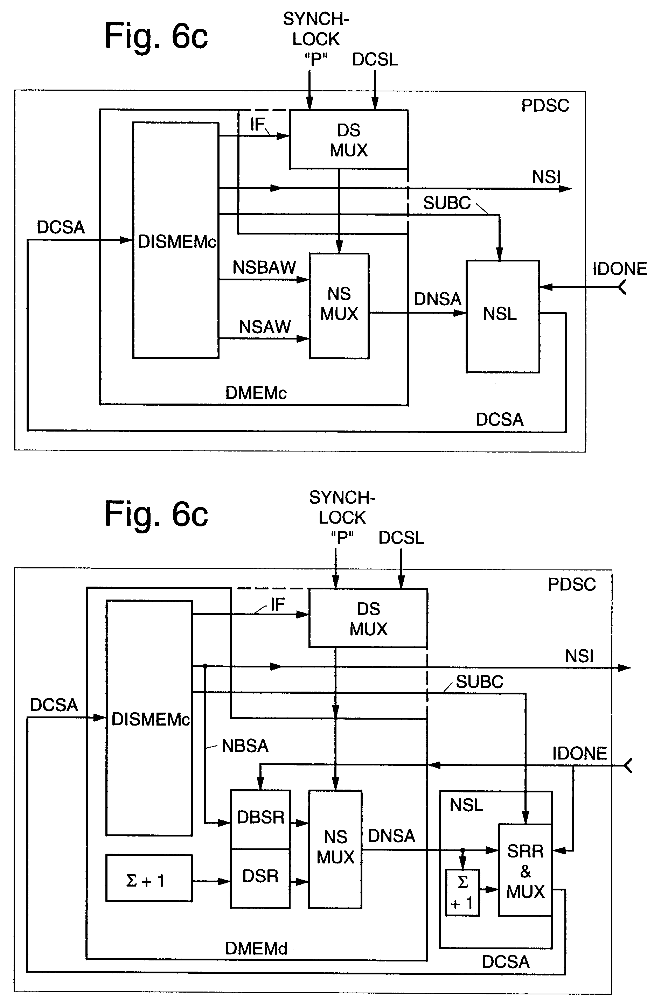

The Fig. 6 generic PDSC is shown in alternate embodiments in Figs. 6a, 6b, 6c and 6d, each of which partitions DMEM differently. PDSCs in the embodiments of Figs. 6a and 6b have DMEMs partitioned into Decommutator State MEMory (DSMEM) segments a and b, respectively (DSMEMa, DSMEMb) and Decommutator Instruction MEMory (DIMEM) segments a and b, respectively (DIMEMa, DIMEMb). In Fig. 6a, a DNSA is output from DSMEM when addressed jointly by DCSA bits and by a DCSL bit selected by the IF signal. The Fig. 6a DSMEMa of 256 words X 7 bits is exchangeable for the Fig. 6b DSMEMb of 128 words X 14 bits. Fig. 6b DSMEMb outputs two parallel 7-bit fields, providing both a Next-State Address Word (NSAW) and a Next-State Branch Address Word (NSBAW), to a Next-State Multiplexer (NSMUX) which selects either NSAW or NSBAW as the DNSA.

Fig. 6c shows the PDSC in a third embodiment having its state address and instruction memory collected in Decommutator Instruction and State MEMory unit c (DISMEMc), which remains equivalent in total capacity to DSMEMb plus DIMEMb of Fig. 6b. All three of these DMEM embodiments a,b,and c (DMEMa, DMEMb, and DMEMc) have equivalent storage capacities of 3456 bits.

FIg. 6d shows a further improvement in memory requirements over the Fig. 6a, 6b and 6c embodiments. Decommutator Instruction and State MEMory unit d (DISMEMd) area and, therefore, access time is reduced almost by half in the embodiment shown in Fig. 6d. This embodiment takes advantage of PDSC programs being structurable mostly "inline," branching only infrequently.

In the Fig. 6d embodiment, next-state addresses are generated simply by incrementing the DCSA. With each IDONE signal Decommutator Sequencer State Register (DSSR) stores the incremented DCSA, which is then selected as the DCSA.

CALL and GOTO instructions are executed in two access cycles of DISMEMd. Conditional instructions are executed by selecting an input for DSMUX to select either the Decommutator Branch State Register (DBSR) or the DSSR as the source for DCSA. By placing the Branch State Address (BSA) in the DISMEMd address just after the CALL or GOTO instruction, the second DISMEMd access outputs the BSA in place of NSI and BSA as input into the DBSR. The DBSR output is consequently selected as the new DCSA.

Subsequent DCSA's are generated by incrementing DCSA and storing it in DSSR. A RETURN is executed in all Fig. 6 embodiments by storing return a address in the SRR.

### Decommutator Dimensions

The PDSC is preferably embodied as illustrated in Fig. 6d. The majority of standard or non-standard format PCM/TDM decommutation programs are executable using Decommutator Instruction MEMory (DIMEM) of 128 words including fields of SUBroutine Control (SUBC) in bits 11-12, branching control (IF) in bits 8-10, and Next Sequence Instruction (NSI) for the PDS in bits 0-7. NSI is further divided into Sequence Repetition Number (SRN) in bits 4-7, and Current Scan Sequence (CSS) in bits 0-3.

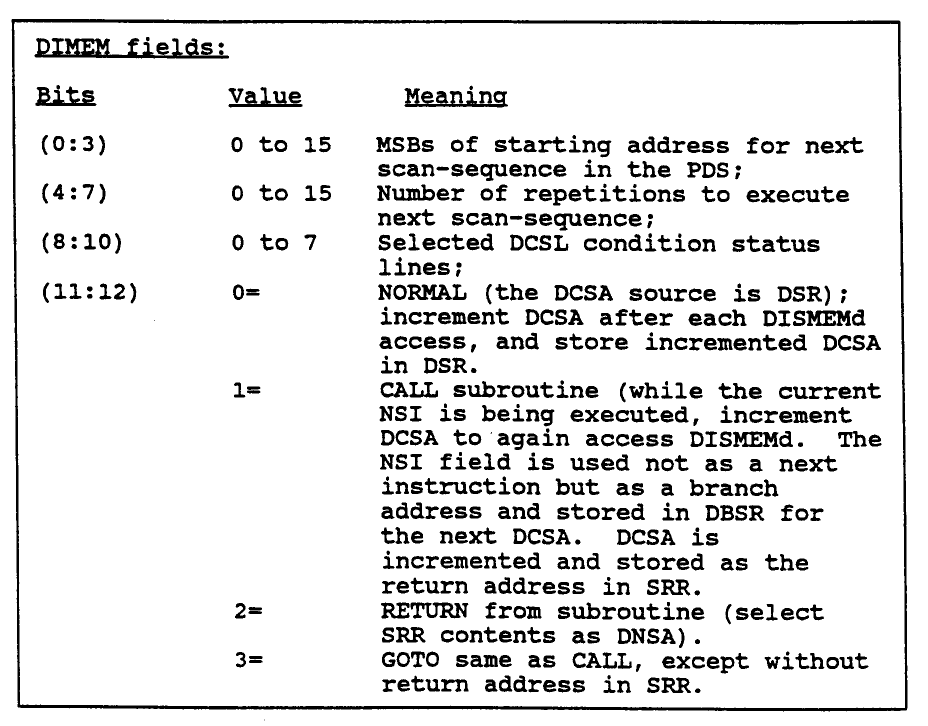

The PDS executes "scan-sequences" of micro-instructions to manipulate input PCM/TDM signal bits. A specific scan-sequence and its number of repetitions are designated by the NSI. While the PDS is executing this previously loaded NSI, the PDSC sets up the next NSI. When a scan-sequence's last cycle has been completed the PDS asserts an IDONE signal which loads the waiting NSI into the PDS, and cycles the PDSC to select the following NSI.

Thus the PDSC cycles through its states at the IDONE rate, or at twice the IDONE rate for CALL or GOTO instructions. The maximum PDSC design cycle rate can be adjusted by limiting the length of the shortest (fastest) scan-sequence which the PDS will execute. A practical limit allows the PDSC to cycle no faster than one-fourth the rate of the PDS, which cycles at the BCLK rate.

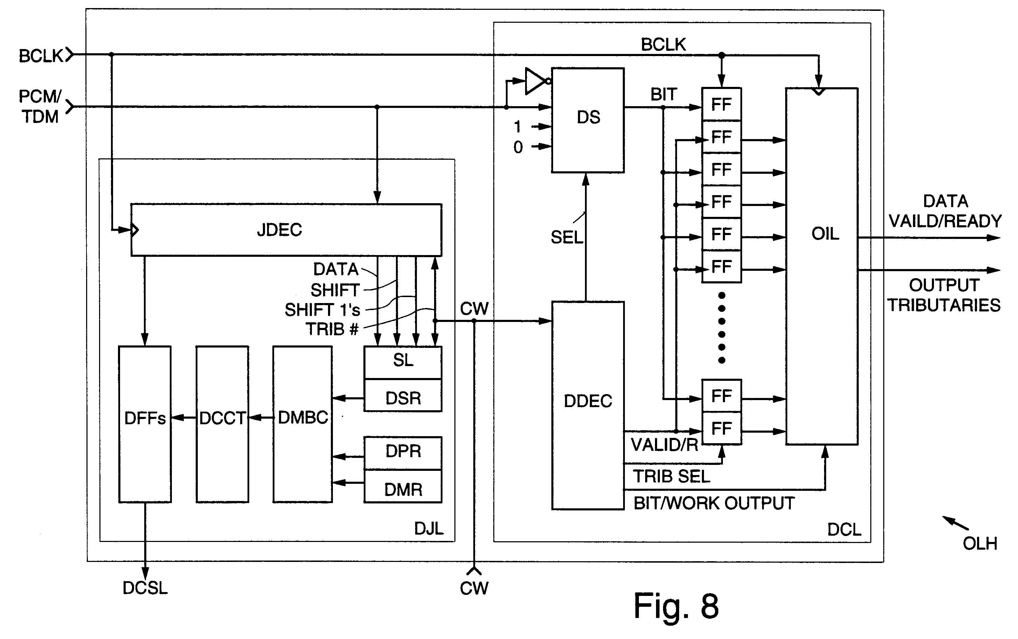

The PDS is shown in Fig. 7 embodied in sequence program memory (SPM), and in sequence control logic (SCL) in turn including a Sequence Control Register (SCR), a Sequence Cycle Counter (SCC), Terminal Logic (TL) and a Sequence Program Counter (SPC). The SPM has a capacity of preferably 256 words of 8 bits each writable with data fields defining micro-instructions such as:

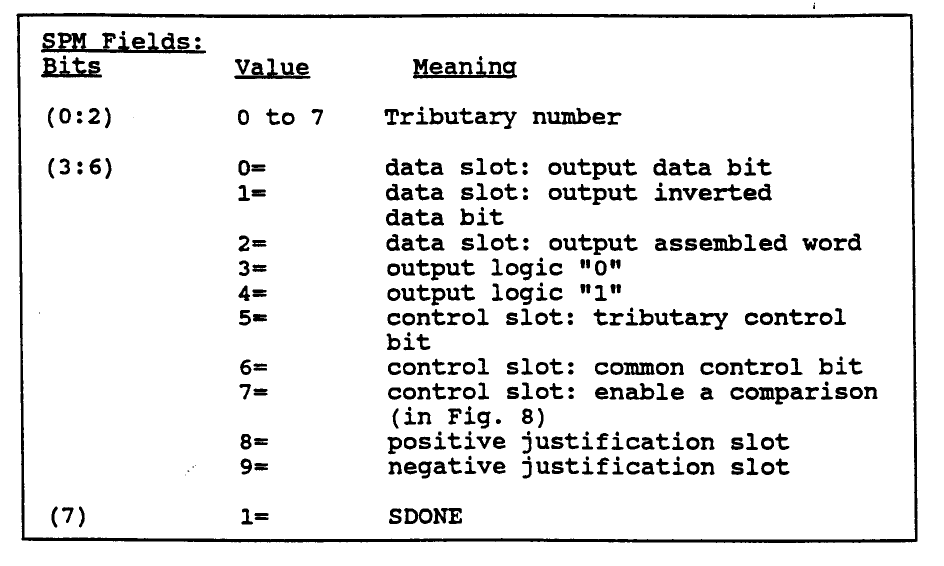

SPM output CW micro-instructions are used as steps in preferably (4 to 16) clock cycles of (any of 16) scan-sequences executed in response to NSIs.

Assuming the PDs has already returned an IDONE signal, the NSI waiting to be input to the SCL (as shown in Fig. 7) is latched by the SCR and (then) output in parallel as a 4-MSB Current Scan Sequence (CSS) field indicating a starting address, and a four-LSB field indicating a SRN of times to repeat addressing, of a scan sequence in the SPM. The LSBs initialize and BCLK increments LSBs through SPM addresses to output CW bits (0:6) to the OLH.

SPM scan-sequences terminate when a CW contains a 'one' in bit No. 7 (SDONE) which increments SCC, resets the SPC and restarts execution of the current scan-sequence.

The PDSC sets up a following NSI while current scan-sequence instructions are re-executed until their final repetition has been completed by the PDS.

When the SCC reaches its terminal count =SRN, the TL allows SDONE to generate an IDONE signal which strobes the SCR to latch in another NSI. Referring again to Figs. 6, the IDONE signal simultaneously strobes the NSL to latch another DNSA for feedback as a new DCSA. Additional NSIs may be used to extend to 32 or beyond the number of repetitions of given sequence.

An example scan-sequence consists of eight CWs for causing the OLH to decommutate data signals to eight tributaries in a selected order. CW signals are equivalent to strings of in-line code repetitively "calling" the "hardware subroutine" Fig. 8 OLH to perform dejustification or decommutation operations.

### Data Output Logic Hardware

The architecture according to the present invention for controller-sequencer-hardware for decommutation is well adapted also for dejustifying signals in synchronous and/or plesiochronous multiplexing environments.

Preferably, conditional data signal bit manipulations such as dejustifications are performed in hardwired logic by the OLH rather than by having the PDSC selecting a justification control program sequence for this purpose to be exercised by the PDS.

The OLH includes dejustification control logic (DJL) and decommutation control logic (DCL). The Output Interface Logic (OIL), besides a data signal, also provides a "data valid/ready" signal, controlled by the Decommutator data field DECoder DDEC.

Fig. 8 represents DJL hardware for assembling and interpreting Justification Control words from JC bits as noted for the example in Fig. 3. DJL includes a Justification data field DECoder and data select (JDEC), Shift Logic (SL), Dejustification Shift Registers (DSR), Dejustification Pattern Registers (DPR), Dejustification Mask Registers (DMR), Dejustification Masked-Bit Comparators (DMBC), a Dejustification DeteCT if all bits compare register (DDCT) and Flip-Flops (DFFs).

Received PCM/TDM stream bits which are candidates for being bits JC are shifted singly into one of the 8 DSR selected by tributary select bits (0:2) of CW. Bits JC may be contiguous in a frame or distributed within a frame or across multiple frames. The DJL can assemble bits from arbitrary formats because bit JC shifting is controlled by the CW input to JDEC. The Dejustifier shift Registers' (DSR) contents are compared by Dejustifier Masked Bit Comparator (DMBC) against a mask and a reference pattern retrieved from respective registers Dejustifier Mask Register (DMR) and Dejustifier Patter Register (DPR). The Dejustifier DeteCT-if-all-bits-compare circuit (DDCT) asserts a TRUE signal if all non-masked comparing bits match. Once a Justification Control word has been assembled in a DSR, a JDEC enable-comparison (RESET) signal latches the DDCT output into one of the eight DFF's.

Preferably, an initialization procedure configures DJL with rules for specific justifications. For example, common JC words are strings of an odd number of "1"s for which the rule is to recognize that the majority of bits in the JC are "1"s. In this example, the initialization procedure configures either SL to shift only "1"s. Then, DMBC tests for strings of (n/2)+1 "1"s, where "n" is the number of "1"s in the JC word. Thus, for JC words of five "1"s (11111), DMBC tests for strings of a majority out of five, i.e., at least three "1"s, e.g., 111xxx.

Fig. 8 shows the DCL, which includes a DDEC, a Data Selector (DS), a set of 16 FFs, and OIL. CW ordinarily has its bits (3:6) set to equal zero and causing DS to select the current PCM/TDM data bit signal as the data source. However, as a result of dejustification, CW bits (3:6) may either =1 causing DS to select the PCM/TDM data bit complement, =4 to select a logic one, or =3 to select a logic zero. The DS output data bit and the DDEC data Valid/Ready bit set whichever pair of FFs is designated by tributary select bits (0:2) of CW.

Returning to Fig. 8, the justification control signal test outcomes are output as DCSL signals to the PDSC. At the estimated time for executing a justification action, the PDSC produces an NSI conditioned on a DCSL status. The NSI then controls the PDS to output a CW which causes the DCL (Fig. 5) to control the data valid/ready bit and thereby perform a justification action as described above. If there is a data bit contained in the current time slot then the data valid/ready signal will be asserted to indicate that a tributary data is being output. Conversely, if there is not a data bit in the current time slot, then the data valid signal will not be asserted.

In Fig. 8 the OIL outputs bit-serial data and data-valid from up to eight tributaries. Other embodiments of OIL could output word-serial or word-parallel data signals from each possible tributary. OIL contains sufficient registers and logic for an application to prepare output word-parallel data from multiple tributaries, and ready signals for each tributary.

### Initialization

The present invention advantageously facilitates INITialization by a separate function (INIT), which Fig. 4 shows as an off-line configuration control from which, preferably, upon power up and/or reconfiguration, configuration and initialization information is input through a serial port and transmitted to the various elements of the demultiplexer by way of conventional additional data paths not shown in drawings 4 through 9. Initialization signals are down-loaded first, to load micro-programs into both controllers' state and instruction memories; second, to load the scan-sequencer micro-program into the SPM; third, to configure the FAL, DJL and DCL output logic hardware; fourth, to load terminal-count values into counters in OLH; and finally, to load OLH correlation patterns into pattern registers and masks into mask registers. The MPX-100 performed initialization functions within the state machine, although the MPX-100 still required off-line down-loading of its state memory control store. The present invention's combination of down-loading memories and configuring hardware significantly reduces the control store size requirements, at the modest expense of additional hardware which is a good tradeoff to minimize control store sizes.

It will be obvious to one skilled in the art that this invention relates to a system for optimizing the speed and flexibility of a PCM/TDM demultiplexer where constraints must be observed as to the total volume of logic circuitry that may be used, and that, as the technology for packaging logic inevitably improves, the principles described herein may be applied to produce embodiments of this invention that are faster, more compact, or both. In addition, it is clear that other functional elements not described herein may be included within the structure of the preferred embodiment, such as a feedthrough descrambler.

## Claims

1. Apparatus for demultiplexing a PCM/TDM input data signal comprising:
a frame alignment means including
frame alignment logic means (FAL) for receiving said PCM/TDM input data signal, a bit clock signal (BCLK) recovered from said input data signal, and a current instruction signal (CI) for detecting frame alignment signals (F) present in said PCM/TDM input data signal and for generating a frame synch signal (P) in response to the detection of a boundary of a frame in said input data signal, said logic means (FAL) being additionally operative to generate a frame alignment status signal (FCSL); and
programmable frame alignment controller means (PFAC) for receiving said bit clock signal (BCLK) and said frame alignment status signal (FCSL), for generating said current instruction signal (CI) and controlling said frame alignment logic means (FAL); and
dejustification and decommutations means (DEC) including
output logic means (OLH) for receiving said bit clock signal (BCLK), said input data signal (PCM/TDM), and a control work (CW), and for generating one or more output tributary signals, data valid signals, and dejustification status signals (DCSL);
programmable sequencer means (PDS) for receiving said bit clock signal (BCLK) and a next sequence instruction (NSI), and for generating said control word (CW) for controlling said output logic means (OLH), and for generating an instruction done signal (IDONE); and
programmable sequencer controller means (PDSC) for receiving said frame synch signal (P), said dejustification status signal (DCSL) and said instruction done signal (IDONE), and for generating said next sequence instruction (NSI) for controlling said programmable sequencer means (PDS), said output logic means (OLH) and said programmable sequencer means (PDS) being caused to operate at said big clock (BCLK) rate and said programmable sequencer controller means (PDSC) being caused to operate at a fraction of said bit clock (BCLK) rate.

2. Apparatus for demultiplexing as in claim 1 wherein said programmable frame alignment controller means (PFAC) includes control memory means (FSMEM, FIMEM) caused to cycle at said bit clock (BCLK) signal frequency and divided into a state segment memory means (FSMEM) for storing address information (FNSA), and an instruction segment memory means (FIMEM) for storing instruction information (NI).

3. Apparatus for demultiplexing as in claim 2 wherein said frame alignment logic means (FAL) includes:
instruction decoder means (FDEC) for receiving instructions (CI) from said programmable frame alignment controller means (PFAC), for decoding said instructions (CI) and for generating control signals to control an interleave pattern memory means (IPR), a shift register means (FSR), an address counter means (ADDCT), a flip-flop means (FFF), and a programmable counter means (PRCTR), said shift register means (FSR) being operative to receive said input data signal (PCM/TDM) serially, a candidate frame alignment pattern word in parallel, and said control signals, and operative to combine said input data signal (PCM/TDM) with said candidate frame alignment pattern word to form an updated candidate frame alignment pattern word in response to said control signals;
interleave pattern memory means (IPR) with address means for receiving interleave pattern memory address signals, control means for receiving said control signals, and data input/output means for receiving said updated candidate frame alignment pattern word and for outputting said candidate frame alignment pattern word to said shift register means (FSR);
address counter means (ADDCT) for receiving said control signals and said bit clock signal (BCLK), and generating said interleave pattern memory address signals;
pattern register means (FPR) for storing and outputting a predetermined frame alignment pattern word;
mask register means (FMR) for storing and outputting a predetermined frame alignment pattern comparison mask word;
masked bit comparison means (FMBC) for receiving said predetermined frame alignment pattern word, said predetermined frame alignment pattern comparison mask word, and said candidate frame alignment pattern word, and for generating a comparison result signal for each bit position of said candidate frame alignment pattern word and said predetermined frame alignment pattern word according to said predetermined frame alignment pattern comparison mask word;
detection means (FDCT) for receiving said comparison reset signals, for producing an equality signal responsive to a result of true in al said comparison result signals;
flip-flop means (FFF) for storing said equality signal produced by said detection means (FDCT) and producing said frame-synch signal (P) indicating said detection of said boundary of a frame; and
programmable counter means (PRCTR) for receiving said control signals, and for producing said frame alignment status signals (FCSL) for testing by said programmable frame alignment controller means (PFAC).

4. Apparatus for demultiplexing as in claim 1 wherein said instruction done signal (IDONE) is generated at a frequency lower than the frequency of said bit clock signal and is used as a clock for causing said programmable sequencer controller means (PDSC) to execute the next instruction, and wherein said programmable sequencer controller (PDSC) comprises:
a next state logic means (NSL) for receiving a next state address signal (DNSA), said instruction done signal (IDONE), and a subroutine control signal (SUBC), and for storing and outputting a current state address signal (DCSA) upon receipt of said programmable sequencer controller clock signal (IDONE); and
a memory means (DMEM) having address means for receiving said current state address signal (DCSA), said instruction done signal (IDONE), said output logic means status signal (DCSL) and said frame-synch signal (P), for storing predetermined next state address information and next sequence instruction information, for generating said next state address signal (DNSA) and a next sequence instruction signal (NSI), wherein said next sequence instruction signal (NSA) controls said programmable sequencer means (PDS) and changes only when said current state address signal (DCSA) changes.

5. Apparatus for demultiplexing as in claim 4 wherein said memory means (DMEM) of said programmable sequencer controller (PDSC) comprises:
an instruction memory means (DIMEMa, DIMEMb) having address means for receiving said current state address signal (DCSA), and for storing and outputting data including said next sequence instruction information (NSI); and
a next state address memory means (DSMEMa, DSMEMb) having address means for receiving said current state address signal (DCSA) and at least one of said output logic means status signal (DCSA) and said frame-synch signal (P), and for storing and outputting data comprising next state address information (DNSA).

6. Apparatus for demultiplexing as in claim 4 wherein said memory means (DMEM) of said programmable sequencer controller (PDSC) includes an instruction and address memory means (DISMEMc) having address means for receiving said current state address signal (DCSA), and for storing and outputting simultaneously next state address information, next state branch address information, and next sequence instruction information (NSI).

7. Apparatus for demultiplexing as in claim 4 wherein said memory means (DMEM) of said programmable sequencer controller (PDSC) includes:
next instruction and next branch address memory means (DISMEMd) having address means for receiving said current state address signal (DCSA), and for storing and outputting alternately said next state branch address information (NBSA) and said next sequence instruction information (NSI); and
logic means (DBSR, NSMUX, DSMUX) for receiving said next state branch address information (NBSA) and at least one of said output logic means status signal (DCSL) and said frame-synch signal (P), and for generating said next state address signal (DNSA) from said next state branch address information (NBSA) or from a result of performing an arithmetic operation (Σ+1) on a previously generated next state address signal (DCSA).

8. Apparatus for demultiplexing as in claim 4 wherein said programmable sequencer (PDS) includes:
sequence program memory means (SPM) with address means for receiving a current scan sequence signal (CSS) and a sequence program counter (SPC) output signal, for storing control words (CW) and outputting control word information used to control said output logic means (OLH), said control word information including a plurality of sequences of said control words (CW), each of said control words (CW) occupying one storage location in said sequence program memory (SPM), said sequence program memory (SPM) further including last step signaling means for providing a last step signal (SDONE) when said last control word (CW) of a sequence has been output; and
sequence control logic means (SCL) for receiving said next sequence instruction information (NSI), said bit clock signal (BCLK) and said last step signal (SDONE), for generating said current scan sequence signal (CSS) and said sequence program counter output signal, and for cyclically selecting successive steps of said sequence.

9. Apparatus for demultiplexing as in claim 8 wherein said sequence control logic means (SCL) comprises:
sequence control register means (SCR) for receiving said next sequence instruction (NSI) information, providing sequence address information to said sequence program memory and providing sequence repeat information;
sequence cycle counter means (SCC) for storing said sequence repeat information from said sequence control register (SCR), for counting in response to said last step signal (SDONE), and for outputting a cycle complete signal when said sequence of steps has repeated in accordance with said sequence repeat information;
terminal logic means (TL) for receiving said bit clock signal (BCLK), said last step signal (SDONE), and said cycle complete signal, and for outputting a signal (IDONE) for loading said sequence control register (SCR) and indicating to said programmable sequencer controller that said current sequence has ended; and
sequence program counter (SPC) means reset to a predetermined value in response to said last step signal (SDONE) and operative to count in response to said bit clock signal (BCLK), and to provide addresses of successive steps of a sequence to said sequence program memory means.

10. Apparatus for demultiplexing as in claim 7 wherein said programmable sequencer (PDS) includes:
sequence program memory means (SPM) with address means for receiving a current scan sequence signal (CSS) and a sequence program counter (SPC) output signal, for storing control words (CW) and outputting control word information used to control said output logic means (OLH), said control word information including a plurality of sequences of said control words, each of said control words occupying one storage location in said sequence program memory (SPM), said sequence program memory (SPM) further including last step signaling means for providing a last step signal (SDONE) when said last control word (CW) of a sequence has been output; and
sequence control logic means (SCL) for receiving said next sequence instruction (NSI) information, said bit clock signal (BCLK) and said last step signal (SDONE), for generating said current scan sequence signal (CSS) and said sequence program counter (SPC) output signal, and for cyclically selecting successive steps of said sequence.

11. Apparatus for demultiplexing as in claim 10 wherein said sequence control logic means (SCL) comprises:
sequence control register means (SCR) for receiving said next sequence instruction (NSI) information, for providing sequence address information to said sequence program memory (SPM) and for providing sequence repeat information;
sequence cycle counter means (SCC) for storing said sequence repeat information from said sequence control register (SCR), for counting in response to said last step signal (SDONE), and for outputting a cycle complete signal when said sequence of steps has repeated in accordance with said sequence repeat information;
terminal logic means (TL) for receiving said bit clock signal (BCLK), said last step signal (SDONE), and said cycle complete signal, for outputting a signal (IDONE) for loading said sequence control register (SCR) and for indicating to said programmable sequencer controller (PDSC) that said current sequence has ended; and
sequence program counter means (SPC) reset to a predetermined value in response to said last step signal (SDONE) and operative to count in response to said bit clock signal (BCLK), and to provide addresses of successive steps of a sequence to said sequence program memory means (SPM).
